# EUROPÄISCHE PATENTSCHRIFT

(11) **EP 2 461 253 B1**
(45) Veröffentlichungstag und Bekanntmachung des Hinweises auf die Patenterteilung: **15.10.2014**
(21) Anmeldenummer: 11009411.7
(22) Anmeldetag: 28.11.2011
(51) Int. Cl.: G06F 13/42

(54) **Mikroprozessmodul, insbesondere Chipkarten-Mikroprozessormodul**
Micro-process module, in particular chip card microprocessor module
Module de microprocesseur, notamment module de microprocesseur à cartes à puce

(30) Priorität: 01.12.2010 DE 102010053053
(43) Veröffentlichungstag der Anmeldung: 06.06.2012
(73) Patentinhaber: Giesecke & Devrient GmbH, 81677 München (DE)
(72) Erfinder: Baldischweiler, Michael, 81825 München (DE)

(56) Entgegenhaltungen:
- EP-A2- 1 164 485
- DE-A1-102006 008 248

## Beschreibung

Die Erfindung betrifft ein Mikroprozessormodul, insbesondere ein Chipkarten-Mikroprozessormodul, sowie ein Kommunikationssystem und ein Verfahren zum Betrieb eines Mikroprozessormoduls.

Mikroprozessormodule und insbesondere Chipkarten-Mikroprozessormodule werden in einer Vielzahl von Anwendungsbereichen eingesetzt. Neben der klassischen Verwendung in Chipkarten kommen solche Module auch in sog. M2M-Systemen (M2M = Machine to Machine) zum Einsatz. M2M beschreibt dabei die Verwendung von Chipkarten-Mikrocontrollern im Rahmen maschineller Kommunikation, wie z.B. in Automaten, Telemetrie-Geräten oder im Kraftfahrzeug-Bereich. In solchen Systemen erfolgt die Kommunikation zwischen verschiedenen Mikroprozessormodulen über vorbestimmte Übertragungsprotokolle, wie z.B. dem aus dem Stand der Technik bekannten I²C-Protokoll.

Im I²C-Protokoll besteht die Möglichkeit, dass ein Mikroprozessormodul in seiner Funktion als I²C-Slave dem mit dem Modul kommunizierenden I²C-Master signalisiert, dass es beschäftigt ist, indem es das Taktsignal des I²C-Protokolls auf den Pegel "Low" zieht. Damit ist jedoch der zur Datenübertragung verwendete I²C-Bus vollständig für eine Kommunikation mit anderen Einheiten blockiert.

DE102006008248 offenbart ein Mikroprozessormodul gemäß dem Oberbegriff des Anspruchs 1.

Aufgabe der Erfindung ist es deshalb, die Kommunikation eines Mikroprozessormoduls mit anderen Einheiten derart zu verbessern, dass auf einfache Weise den anderen Einheiten mitgeteilt wird, dass das Mikroprozessormodul gerade aktiv ist.

Diese Aufgabe wird durch den Gegenstand der unabhängigen Ansprüche gelöst. Weiterbildungen der Erfindung sind in den abhängigen Ansprüchen definiert.

Es ist ein erster Grundgedanke der vorliegenden Lösung eine Information über den Aktivitätsstatus in der Anwendungsschicht zu übertragen. Die im Schichtenmodell des Protokolls unter der Anwendungsschicht liegende Übertragungsschicht, wie beispielsweise eine I2C-Schicht, kann somit unverändert bleiben.

Das erfindungsgemäße Mikroprozessormodul, welches insbesondere als Chipkarten-Mikroprozessormodul in der Form eines entsprechenden Mikrocontrollers ausgebildet ist, umfasst einen Mikroprozessor zum Ausführen einer Applikation, wobei die Applikation z.B. das Betriebssystem im Mikroprozessor darstellen kann. Ferner ist eine Schnittstelleneinheit vorgesehen, über welche im Rahmen der Applikation zwischen dem Mikroprozessormodul und einem externen Modul Applikationsdaten der Applikation mittels eines vorbestimmten Übertragungsprotokolls austauschbar sind.

Das erfindungsgemäße Modul zeichnet sich dadurch aus, dass im Rahmen seines Betriebs ein Aktivitätsstatus im Modul gesetzt wird, wenn der Mikroprozessor mit der Verarbeitung von Applikationsdaten beschäftigt ist, und dass im gesetzten Aktivitätsstatus bei einem oder mehreren vorgegebenen Zugriffen des externen Moduls auf die Schnittstelleneinheit ein vorbestimmter Code der Applikation, mit dem der Aktivitätsstatus angezeigt wird, über das vorbestimmte Übertragungsprotokoll durch die Schnittstelleneinheit ausgesendet wird.

Der Erfindung liegt die Idee zu Grunde, dass im Rahmen der Applikation ein entsprechender Code vorgesehen werden kann, mit dem einem, mit dem Mikroprozessormodul kommunizierenden externen Modul mitgeteilt wird, dass das Mikroprozessormodul bzw. dessen Mikroprozessor gerade aktiv ist. Die Information wird somit nicht basierend auf entsprechenden Befehlen des Übertragungsprotokolls übermittelt, sondern in den Applikationsdaten der Applikation selbst codiert. Dies hat den Vorteil, dass das Übertragungsprotokoll nicht abgewandelt werden muss. Es können somit vorbestimmte, aus dem Stand der Technik bekannte Übertragungsprotokolle verwendet werden.

Die Schnittstelleneinheit des Mikroprozessormoduls kann je nach Anwendungsfall zur kontaktbehafteten und/oder kontaktlosen Kommunikation ausgelegt sein. In einer bevorzugten Variante wird eine kontaktbehaftete Schnittstelleneinheit verwendet. Besonders bevorzugt wird eine I²C-Schnittstelleneinheit eingesetzt, so dass als vorbestimmtes Übertragungsprotokoll das I²C-Protokoll zum Einsatz kommt. Dieses Protokoll ist ein einfach aufgebautes zeitsynchrones Übertragungsprotokoll, welches häufig von Mikroprozessormodulen unterstützt wird.

Ein besonders bevorzugter Anwendungsfall der Erfindung ist der Einsatz des Mikroprozessormoduls als M2M-Modul im Rahmen des bereits oben erwähnten M2M-Systems. Ebenso kann das Mikroprozessormodul ein Sicherheitsmodul (z.B. ein Sicherheitselement bzw. Secure Element) sein, welches gegebenenfalls auch ein Bestandteil eines M2M-Systems sein kann.

In einer weiteren, bevorzugten Ausführungsform wird der Austausch der Applikationsdaten und damit auch die Übermittlung des vorbestimmten Codes zur Anzeige des Aktivitätsstatus über ein Schieberegister der Schnittstelleneinheit realisiert.

Zweckmäßigerweise ist das Mikroprozessormodul in einer bevorzugten Variante derart ausgestaltet, dass der Aktivitätsstatus über ein Datenfeld und insbesondere über ein Statusbit in einem Speicher des Mikroprozessormoduls angezeigt wird.

Der Aktivitätsstatus kann in dem erfindungsgemäßen Mikroprozessormodul durch die Applikation selbst gesetzt werden. Gegebenenfalls besteht auch die Möglichkeit, dass eine Hardwarekomponente des Mikroprozessormoduls zum Setzen des Aktivitätsstatus verwendet wird, so dass das Setzen des Aktivitätsstatus von der Applikation entkoppelt ist. Solche Hardwarekomponenten können z.B. ein Crypto-Coprozessor oder eine Ladungspumpe in einem nicht-flüchtigen Speicher (z.B. EEPROM bzw. Flash) sein.

In einer weiteren, besonders bevorzugten Ausführungsform der Erfindung ist das Mikroprozessormodul derart ausgestaltet, dass im gesetzten Aktivitätsstatus und dann, wenn eine mit der Adresse des Mikroprozessormoduls zu vergleichende Adresse, welche von dem externen Modul übermittelt wird, an der Schnittstelleneinheit im Mikroprozessormodul empfangen wird, der vorbestimmte Code der Applikation durch die Schnittstelleneinheit ausgesendet wird, falls die weiteren Bedingungen vorliegen, dass eine Übereinstimmung zwischen der empfangenen Adresse und der Adresse des Mikroprozessormoduls festgestellt wird und ein Lesezugriff des externen Moduls detektiert wird. Diese Variante der Erfindung kommt insbesondere bei der Verwendung des I²C-Protokolls zum Einsatz, da im Rahmen der I²C-Kommunikation das Mikroprozessormodul immer über eine entsprechende Adresse angesprochen wird und ferner signalisiert wird, ob ein Lesezugriff oder ein Schreibzugriff erfolgen soll. In einer bevorzugten Variante der Erfindung erfolgt die Detektion des Lesezugriffs durch eine mit der empfangenen Adresse übermittelten Information, insbesondere durch ein entsprechend übermitteltes Bit, das signalisiert, ob ein Lesezugriff oder ein Schreibzugriff vorliegt.

In einer weiteren Variante der Erfindung wird beim Aussenden des vorbestimmten Codes neben dem Code selbst auch eine Information übertragen, mit der angezeigt wird, dass keine weiteren Daten folgen. Im Rahmen des I²C-Protokolls kann dabei das dort beschriebene NACK (NACK = Non-Acknowledgement) eingesetzt werden.

In einer bevorzugten Ausführungsform wird die Aktivität des Mikroprozessormoduls an einen Schreibzugriff des externen Moduls auf die Schnittstelleneinheit gekoppelt, da der Schreibzugriff mit empfangenen Applikationsdaten verbunden ist, welche anschließend im Mikroprozessormodul verarbeitet werden und somit zu einer Aktivität dieses Moduls führen.

In einer besonders bevorzugten Variante der soeben beschriebenen Ausführungsform ist das Mikroprozessormodul derart ausgestaltet, dass die im Rahmen eines Schreibzugriffs des externen Moduls in der Schnittstelleneinheit empfangenen Daten auf Integrität überprüft werden, wobei bei vorhandener Integrität der Aktivitätsstatus gesetzt wird und die empfangenen Daten durch die Applikation weiterverarbeitet werden und wobei bei nicht vorhandener Integrität ein Fehlercode an die Applikation ausgegeben wird. Somit wird das Setzen des Aktivitätsstatus auch daran gekoppelt, ob Applikationsdaten in der Schnittstelleneinheit fehlerfrei empfangen wurden. Ist dies nicht der Fall, braucht der Aktivitätsstatus nicht gesetzt werden, da in diesem Fall keine Weiterverarbeitung der fehlerhaften Applikationsdaten im Modul stattfindet.

In einer weiteren Ausgestaltung der Erfindung wird ferner auch ein Zurücksetzen des Mikroprozessormoduls im Rahmen der Kommunikation über die Schnittstelleneinheit ermöglicht. Dabei kann die Schnittstelleneinheit den Empfang einer vorbestimmten Reset-Sequenz detektieren, wobei bei der Detektion des Empfangs der Reset-Sequenz das Zurücksetzen des Mikroprozessormoduls durch die Schnittstelleneinheit veranlasst wird. Die Reset-Sequenz kann z.B. durch den aufeinander folgenden Empfang eines ersten vorbestimmten Datums und eines zweiten vorbestimmten Datums detektiert werden. Vorzugsweise ist das zweite Datum dabei das Inverse des ersten Datums sein.

Das erfindungsgemäße Mikroprozessormodul ermöglicht die Kommunikation mit einem externen Modul, wobei das externe Modul nicht Bestandteil des Mikroprozessormoduls ist. Die Erfindung umfasst jedoch auch ein Kommunikationssystem, welches sowohl das erfindungsgemäße Mikroprozessormodul als auch das externe Modul umfasst, mit dem das Mikroprozessormodul kommuniziert. Das externe Modul kann dabei auf die Schnittstelleneinheit des Mikroprozessormoduls zugreifen und Applikationsdaten verarbeiten. Das Kommunikationssystem aus Mikroprozessormodul und externem Modul ist derart ausgestaltet, dass im gesetzten Aktivitätsstatus des Mikroprozessormoduls bei einem oder mehreren vorgegebenen Zugriffen des externen Moduls auf die Schnittstelleneinheit der vorbestimmte Code der Applikation über das vorbestimmte Übertragungsprotokoll durch die Schnittstelleneinheit ausgesendet wird und vom externen Modul empfangen wird, wodurch dem externen Modul im Rahmen der Applikation der Aktivitätsstatus angezeigt wird.

Die Erfindung betrifft darüber hinaus ein Verfahren zum Betrieb des oben beschriebenen erfindungsgemäßen Mikroprozessormoduls, wobei auf dem Mikroprozessor des Mikroprozessormoduls eine Applikation läuft bzw. ausgeführt wird. Im Rahmen des Betriebs wird dabei ein Aktivitätsstatus im Modul gesetzt, wenn der Mikroprozessor mit der Verarbeitung von Applikationsdaten beschäftigt ist, wobei im gesetzten Aktivitätsstatus bei einem oder mehreren vorgegebenen Zugriffen eines externen Moduls auf die Schnittstelleneinheit ein vorbestimmter Code der Applikation, mit dem der Aktivitätsstatus angezeigt wird, über ein vorbestimmtes Übertragungsprotokoll durch die Schnittstelleneinheit ausgesendet wird.

Ausführungsbeispiele der Erfindung werden nachfolgend anhand der beigefügten Figuren detailliert beschrieben.

Es zeigen:
- Fig.1: Schematische Darstellung eines Moduls mit einer Schnittstellenschaltung zur automatischen Übermittlung eines Statuscodes, der den Betriebsstatus eines Mikroprozessors anzeigt;
- Fig.2: Schematische Darstellung eines Moduls mit einer erweiterten Schnittstellenschaltung, welche zusätzlich eine Prüfsumme prüft;
- Fig.3: Schematische Darstellung eines Moduls mit einer erweiterten Schnittstellenschaltung, welche zusätzlich einen Reset des Mikroprozessors ermöglicht;
- Fig. 4: Komponenten eines Systems umfassend ein erfindungemäß angepasstes Modul; und
- Fig. 5: Schematisches Ablaufdiagramm für einen Ablauf in dem Modul aus Figur 1.

Nachfolgend wird die Erfindung basierend auf einem Mikroprozessormodul in der Form eines sog. M2M-Moduls M beschrieben. In M2M-Systemen können Mikroprozessormodule in der Form von Chipkarten-Mikrocontrollern verwendet werden.

In den hier beschriebenen Ausführungsformen kommuniziert das M2M-Modul über das aus dem Stand der Technik bekannte I²C-Protokoll mit anderen Modulen, welche über einen I²C-Bus mit dem M2M-Modul verbunden sind. Das I²C-Protokoll ist ein taktsynchrones Übertragungsprotokoll, bei dem über eine SCL-Leitung (SCL = Serial Clock) das entsprechende Taktsignal und über eine SDA-Übertragungsleitung (SDA = Serial Data) die Daten zwischen dem M2M-Modul und einem weiteren Modul übermittelt werden.

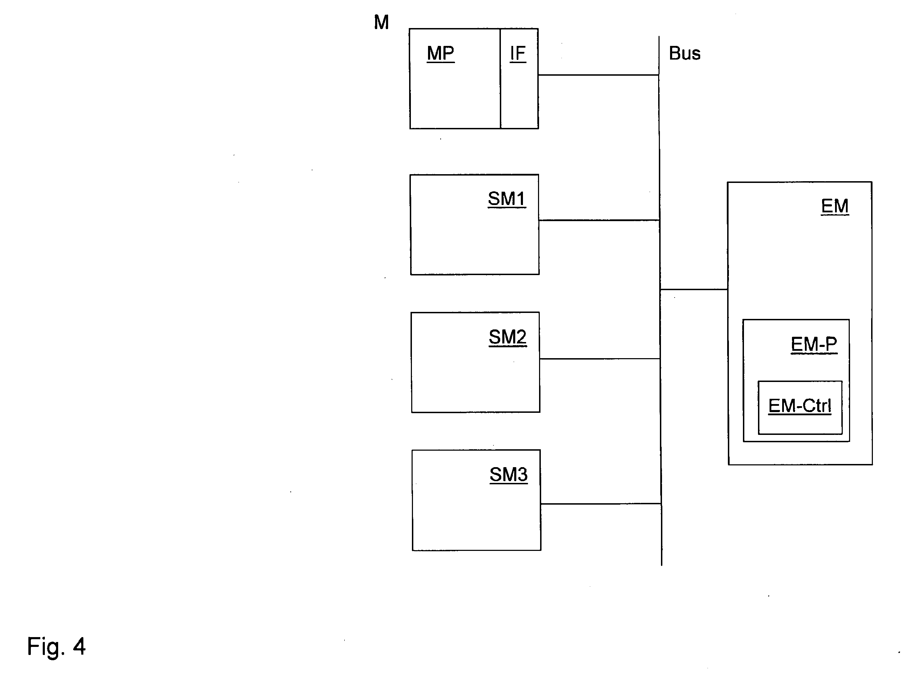

Figur 4 zeigt ein System bestehend aus einem externen Modul EM, das als Master der Kommunikation auf dem gemeinsamen Bus auftritt, und weitere Module M, SM1, SM2 und SM3, die als Slave dieser Kommunikation auftreten. Der Bus ist ein I2C-Bus. Das externe Modul EM steuert über den Bus die Komponenten (weiteren Module) des Systems. Insbesondere umfasst das externe Modul einen Prozessor EM-P, auf welchem eine Systemsteuerungssoftware EM-Ctrl ausgeführt wird. Das M2M-Modul wird mit dem Bezugszeichen M bezeichnet und umfasst einen eigenen (Mikro-)Prozessor MP sowie eine Schnittstelleneinheit IF. Die Schnittstelleneinheit IF ist eine prozessorlose Schaltung.

Das I²C-Protokoll arbeitet nach dem klassischen Master-Slave-Prinzip, wonach auf Anfrage von einem I²C-Master eine Antwort von einem I²C-Slave erzeugt wird. Die Schnittstelle IF des Moduls M fungiert dabei als I²C-Slave, welcher mit einem entsprechenden Master in der Form des externen Moduls EM über den 1²C-Bus kommuniziert.

Die ausgetauschten Signale umfassen, wie in der folgenden Tabelle erkennbar ist, einen Protokollanteil, wie beispielsweise eine Slave-Adresse, eine Angabe des Signaltyps (Read oder Write) sowie Start-, Stop- und Bestätigungsinformationen (ACK), und die eigentlichen Nutzdaten (Data).

**Tabelle 1:**

| Start | Slave address | R/W | *ACK* | Data | *ACK* | Data | *ACK* | Data | ··· | Stop |
|---|---|---|---|---|---|---|---|---|---|---|
| | M2M-Modul | *0* | *0* | Byte 1 | *0* | Byte 2 | *0* | Byte 3 | ··· | |

Wie bereits erwähnt, läuft auf dem Mikroprozessor MP des Moduls M eine entsprechende Applikation oder Anwendung AP, typischerweise auf einem entsprechenden Betriebssystem des Mikroprozessors MP. Als Nutzdaten werden vorzugsweise Anwendungskommandos von dem externen Modul EM zum Mikroprozessor MP gesendet und Anwendungsantworten vom Mikroprozessor MP zum externen Modul EM übertragen. Das Anwendungskommandos bestehen aus mehreren Bytes, vorzugsweise mindestens 5 Bytes. Anwendungsantworten aus zumindest 2 Bytes. Die Anwendungskommandos und -antworten sind vorzugsweise nach ISO 7816 strukturiert.

Ein Ziel der vorliegenden Lösung ist es, die Verarbeitung von Anfragen über die I²C-Schnittstelle zu vermeiden, wenn der Mikroprozessor MP gerade mit der Verarbeitung von Nutzdaten beschäftigt ist. Auf diese Weise soll erreicht werden, dass der Mikroprozessor in Ruhe arbeiten kann und nicht durch Datenanfragen eines I²C-Masters gestört wird.

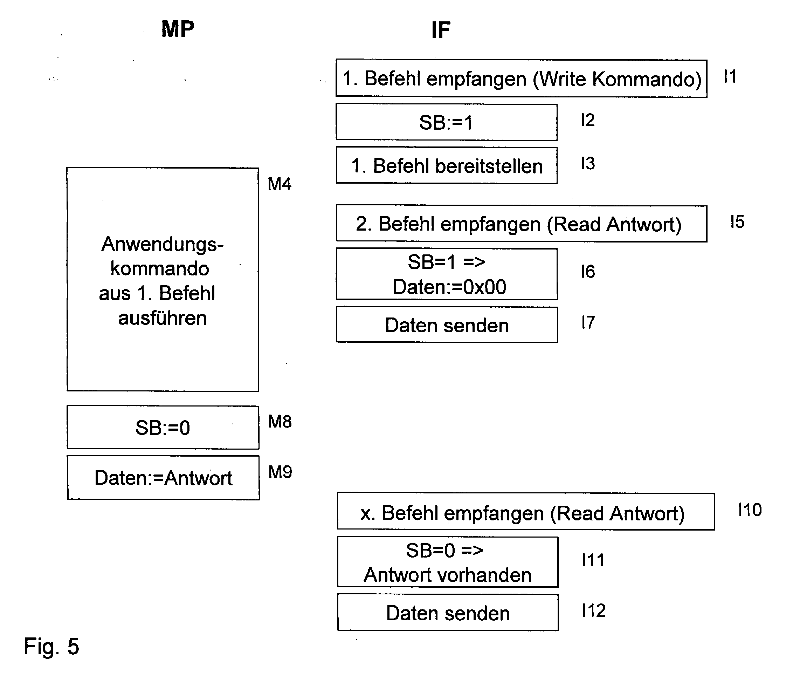

In Figur 5 ist schematisch der zeitliche Ablauf der Verarbeitung von über den Bus eingehenden Signalen in der Schnittstelleneinheit IF und dem Mikroprozessor MP des M2M-Moduls M dargestellt.

Die Schnittstelleneinheit IF empfängt in Schritt I1 einen ersten Befehl "Write Kommando", mit welchem das externe Modul als Nutzdaten ein Anwendungskommando an den Mikroprozessor bzw. dessen Anwendung sendet. Die Schnittstelleneinheit setzt ein Bit oder Flag SB in Schritt 12 und stellt die die empfangenen Nutzdaten dem Mikroprozessor bereit I3.

Der Mikroprozessor MP führt das Anwendungskommando in Schritt M4 aus. Eine Antwort auf das Anwendungskommando holt sich das externe Modul mit einem zweiten Befehl "Read Antwort" ab. Die Schnittstelleneinheit IF empfängt einen zweiten Befehl 15. Da das Bit SB gesetzt ist, verwendet 16 die Schnittstelleneinheit IF automatisch einen vorbestimmten Code als Nutzdaten beim Senden 17 einer Antwort auf den zweiten Befehl. Der vorbestimmte Code ist dem externen Modul EM bzw. dessen Steuerungssoftware EM-Ctrl bekannt. Der vorbestimmte Code signalisiert dem externen Modul EM, dass der Mikroprozessor MP noch beschäftigt (busy) ist. Die Schnittstelleneinheit beantwortet den zweiten Befehl (und ggf. mögliche weitere derartige Befehle) automatisch und selbstständig, d.h. ohne Mitwirkung des Mikroprozessors MP.

Nachdem das Anwendungskommando in dem Mikroprozessor ausgeführt ist, wird das Bit SB gelöscht M8 und die Anwendungsantwort als abholbare Daten bereitgestellt M9. Die Reihenfolge der Schritt M8 und M9 ist beliebig. Vorzugsweise löscht der Mikroprozessor MP das Bit SB. Alternativ kann die Schnittstelleneinheit IF angepasst sein, das Bit SB automatisch zu löschen, wenn der Mikroprozessor Daten bereitstellt. In einer weiteren Alternative kann der Mikroprozessor das Bit SB selbst setzen. Insbesondere kann der Mikroprozessor das Bit SB unabhängig von einer konkreten Verarbeitung von Anwendungsdaten setzen. Beispielsweise kann der Mikroprozessor bzw. dessen Anwendung AP somit eine bestimmte Verzögerung in einem Anwendungsablauf erzwingen.

Empfängt I10 die Schnittstelleneinheit IF nun einen weiteren Befehl ("Read Antwort", der die Antwort auf das Kommando abholen will), wird automatisch die Anwendungsantwort als Nutzdaten gesendet 112, da das Bit SB nun gelöscht ist I11.

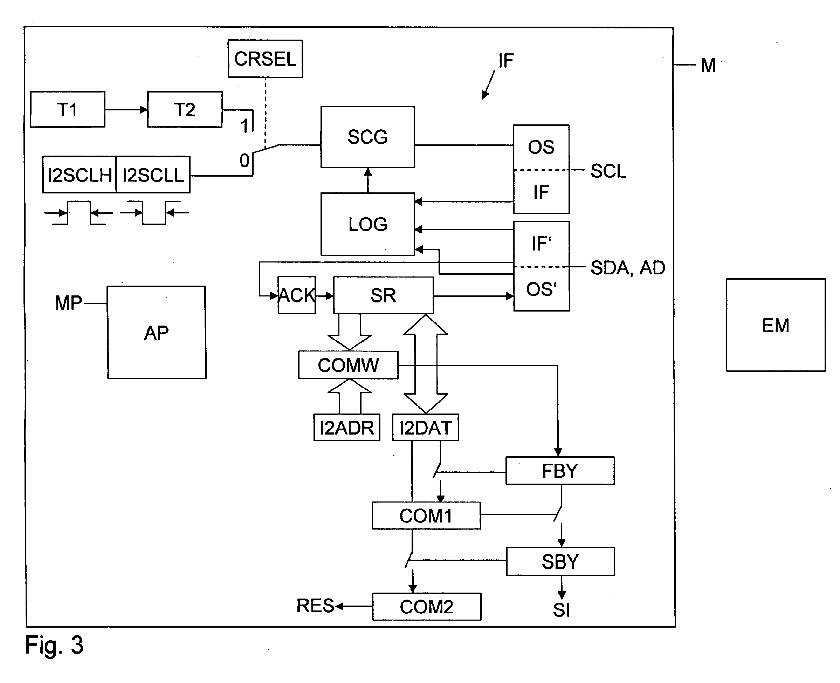

Die Schnittstelleneinheit IF kann den vorbestimmten Code beigesetztem Bit SB unabhängig vom Signaltyp Read- oder Write-Signal versenden. Bevorzugt unterscheidet die Schnittstelleneinheit IF jedoch abhängig vom Signaltyp. Wenn ein Read-Signal erkannt wird, wird automatisch der vorbestimmte Code versendet. Wenn ein Write-Signal erkannt wird, wird dagegen entweder, wie später zu Figur 3 näher erläutert, eine Fallunterscheidung durchgeführt oder die Daten dem Mikroprozessor MP unmittelbar bereitgestellt. Der Mikroprozessor MP wird dann seine Verarbeitung der alten Nutzdaten zugunsten der neuen Nutzdaten ggf. unterbrechen oder sogar abbrechen.

Wenn die Nutzdaten nach ISO7816 strukturiert sind, stellt der Mikroprozessor eine Anwendungsantwort von mindestens 2 Byte bereit. Diese zwei Bytes enthalten eine Statusinformation, wie beispielsweise "0x90 0x00" mit der Bedeutung "Kommando erfolgreich ausgeführt" oder einen Fehlercode. Theoretisch denkbar ist es insofern, dass das externe Modul mehrere Anwendungskommmandos hintereinander sendet, ohne sich zwischendurch die entsprechenden Anwendungsantworten abzuholen.

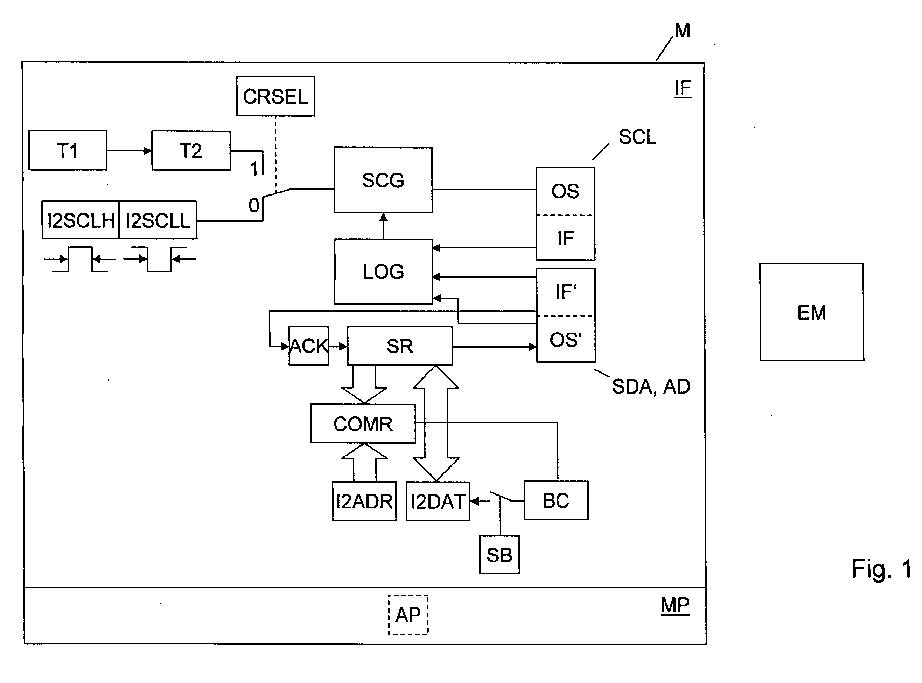

Figur 1 zeigt vereinfachend nur noch den internen Aufbau der Schnittstelleneinheit IF des M2M-Moduls M, den Mikroprozessor MP und das externe Modul EM. Die Schnittstelleneinheit aus Fig.1 ist angepasst, in Antwort auf ein empfangenes Lesesignal automatisch einen Code als Nutzdaten zu senden, solange der Mikroprozessor noch beschäftigt ist.

Das M2M-Modul M umfasst den Mikroprozessor MP, auf dem auf einer über dem Übertragungsprotokoll liegenden Applikationsebene eine Applikation AP läuft. Im Rahmen der Applikation werden Applikationsdaten AD (Nutzdaten) unter Verwendung des I²C-Protokolls über die I²C-Schnittstelleneinheit IF von dem Modul M zu einem externen Modul EM ausgetauscht, wobei hierfür die SDA-Leitung SDA genutzt wird. Die Übertragung des Taktsignals findet über die SCL-Leitung SCL statt.

Die in Fig. 1 gezeigte Schnittstelleneinheit IF enthält eine Vielzahl von Komponenten, welche herkömmlicherweise im Rahmen einer Kommunikation über einen I²C-Bus verwendet werden. Da diese Komponenten in Ihrer Funktion an sich bekannt sind, werden sie nicht weiter im Detail erläutert. Insbesondere ist aus dem Stand der Technik die im linken Teil der Fig. 1 dargestellte Takterzeugung mit den Komponenten T1 (T1 = Timer 1), dem Flag T2 (T2 = TOIF2 = Time Overflow Interrupt Flag) sowie dem Flag CRSEL und den Registern I2SCLH und I2SCLL bekannt. Als weitere bekannte Komponenten werden im Rahmen der I²C-Kommunikation der Taktgenerator SCG (SCG = Serial CLK Generator) sowie die Logik LOG verwendet, welche als "Bit Counter Arbitration & Sync Logic" bezeichnet wird. Die Übertragung des Taktsignals mittels der Leitung SCL erfolgt über die Komponenten OS (OS = Output Stage) sowie IF (IF = Input Filter). Analog sind bei der Datenübertragung ein entsprechender Input Filter IF' und ein Output Stage OS' vorgesehen. Darüber hinaus beinhaltet das Modul eine Einheit ACK für das Aussenden des aus dem I²C-Protokoll bekannten entsprechenden Bestätigungssignals (ACK). Ein ACK-Signal wird vom I2C-SLAVE mittles einer negativen Flanke im achten Takt gebildet (siehe auch Tabelle 2).

Der Empfang bzw. das Aussenden von Applikationsdaten AD über die Datenleitung SDA wird in dem Schnittstellenmodul IF der Fig.1 über ein Schieberegister SR gesteuert, wobei das Schieberegister einen Speicherbereich I2ADR für die Adresse umfasst, über welche das M2M-Modul angesprochen werden soll, sowie ein Register I2DAT für den Empfang bzw. das Aussenden von entsprechenden Nutzdaten über die SDA-Leitung. An die Schnittstelle IF ist der Mikroprozessor MP des M2M-Moduls angebunden, wobei Applikationsdaten AD der auf dem Mikroprozessor laufenden Applikation AP über die I²C-Schnittstelle mit dem externen Modul EM ausgetauscht werden.

Um den Austausch von Applikationsdaten über die I²C-Schnittstelle auszusetzen, wenn der Mikroprozessor MP gerade mit der Verarbeitung von Applikationsdaten beschäftigt ist, wird in den hier beschriebenen Ausführungsformen ein Statusbit SB (SB = Set Busy) verwendet. Das Statusbit SB wird auf "1" gesetzt wird, wenn der Mikroprozessor MP gerade beschäftigt ist. Das Bit "SB" ist dabei einem freien Schieberegister-Bitplatz im Mikroprozessor zugeordnet.

In Fig. 1 ist ein Mechanismus gezeigt, mit dem in der hier beschriebenen Ausführungsform im Falle eines Lesezugriffs des externen Moduls EM auf das M2M-Modul M ein vorbestimmter Code der Applikationsdaten über die I²C-Schnittstelle übermittelt wird. Dieser Code zeigt an, dass das Mikroprozessormodul gerade aktiv ist. Der Code entspricht dabei dem Byte BC (z.B. Statusbyte "0x00"), welches im Falle des gesetzten Statusbits SB von der Schnittstelleneinheit IF an das externe Modul über die Schnittstelle IF übermittelt wird. Um das Byte BC über die I²C-Schnittstelle IF senden zu können, ist die Schnittstelle mit einer Hardware-Erweiterung versehen. Dabei wird der üblicherweise im Rahmen eines Lesezugriffs durchgeführte Vergleich zwischen der von dem externen Modul EM empfangenen Slave-Adresse und der Adresse des Mikroprozessormoduls erweitert.

Der Vergleich wird in dem Komparator COMR durchgeführt. Herkömmlicherweise werden die 7-Bit-Daten der empfangenen Adresse mit der Adresse des Mikroprozessormoduls verglichen. Erfindungsgemäß wird nunmehr in den Vergleich das Read-Signal einbezogen, welches zusätzlich zu der Adresse übertragen wird und welches anzeigt, dass das externe Modul EM Daten aus dem Modul M auslesen möchte. Der anschließende Lesezugriff wird nur dann zugelassen, wenn im Rahmen des Vergleichs die Adressen übereinstimmen und ferner das Read-Signal detektiert wird. Das heißt, es wird ein 8-Bit-Vergleich zwischen den 7-Bit-Daten der Adressen und dem Read-Signal durchgeführt, wobei dieser erweiterte Vergleich immer dann vorgenommen wird, wenn der Mikroprozessor MP gerade aktiv ist und somit das Status SB auf "1" gesetzt ist.

Wird im Rahmen des Vergleichs eine Übereinstimmung zwischen den Adressen sowie das Vorhandensein des Read-Signals festgestellt, wird das Statuswort BC in das Schieberegister I2DAT eingetragen, wobei beim anschließenden Zugriff des Moduls EM zum Auslesen der entsprechenden Daten nicht die eigentlichen auszulesenden Daten, sondern das Byte BC übertragen wird. Zusammen mit dem Byte BC wird ferner das aus dem I²C-Protokoll bekannte NACK (NACK = Non-Acknowledgement) übermittelt, welches anzeigt, dass keine weiteren Datenbytes mehr folgen. Somit wird im Falle eines Lesezugriffs dem externen Modul EM über einen entsprechenden Code BC der Applikation, der auch vom externen Modul verstanden wird, die Aktivität des M2M-Moduls mitgeteilt. Der nicht erfolgreiche Lesezugriff kann dann von dem externen Modul zu einem späteren Zeitpunkt wiederholt werden, wobei der Zugriff dann erfolgreich ist, wenn das Statusbit SB im M2M-Modul nicht mehr gesetzt ist.

Das Statusbit SB kann durch den Mikroprozessor MP direkt gesetzt werden, wobei das Setzen des Bits bzw. das Rücksetzen des Bits durch die auf dem Mikroprozessor MP laufende Applikation AP erfolgt. Gegebenenfalls besteht auch die Möglichkeit, dass separate Hardwaremodule im M2M-Modul, wie z.B. ein Krypto-Coprozessor oder eine Ladungspumpe in einem nicht-flüchtigen Speicher (EEPROM oder Flash), das Setzen bzw. Rücksetzen des Bits automatisch steuern. Dies ist dann erforderlich, wenn die Applikation im M2M-Modul z.B. wegen zu hohem Stromverbrauch gestoppt werden muss.

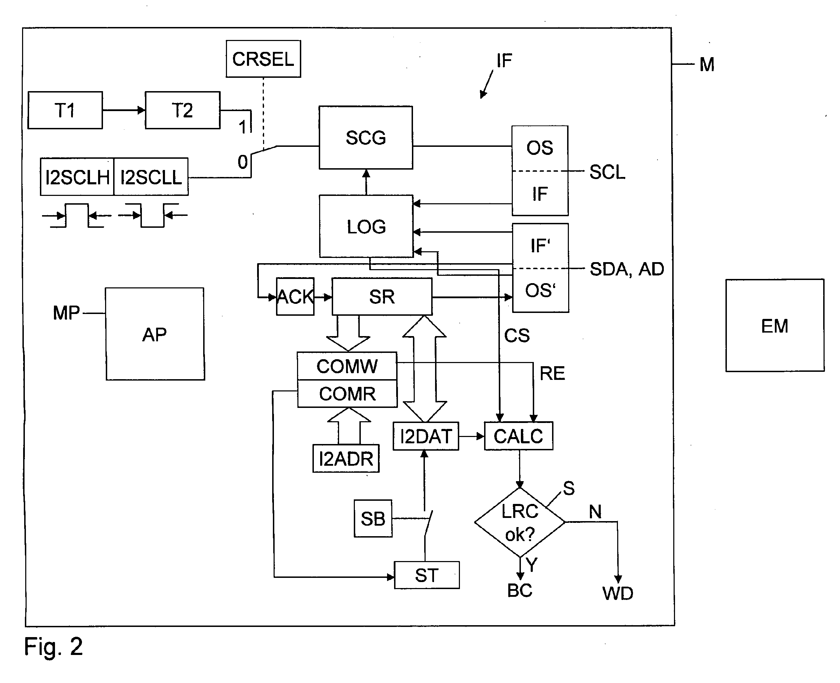

In Fig. 2 ist eine Ausgestaltung der Schnittstelleneinheit IF gezeigt, die bei einem Schreibzugriff (über die I²C-Schnittstelle) automatisch eine Prüfsumme der Nutzdaten prüft.

Die in Fig. 2 dargestellten Komponenten entsprechen dabei größtenteils den Komponenten der Fig.1, so dass mit den gleichen Bezugszeichen wie in Fig. 1 dargestellte Einheiten in Fig. 2 und auch in der weiter unten beschriebenen Fig. 3 nicht nochmals erläutert werden.

Gemäß Fig. 2 erfolgt im Rahmen eines Schreibzugriffs des Moduls EM zunächst eine Integritätsprüfung der von dem Modul EM übermittelten Daten. Dies wird dadurch ermöglicht, dass die vom externen Modul gesendeten Daten zusätzlich eine Prüfsumme, z.B. in der Form einer CRC (CRC = Cyclic Redundancy Check) oder LRC (LRC = Longitudinal Redundancy Check), enthalten. Die Prüfsumme wird automatisch beim Empfangen eines Startbits gemäß dem I²C-Protokoll auf der SDA-Leitung zurückgesetzt. Dies wird durch den Befehl RE angedeutet, der von der weiter unten beschriebenen Einheit CALC zur Berechnung der Prüfsumme empfangen wird.

Im Rahmen des Empfangs von Daten wird in der Schnittstelle IF zunächst analog zum Lesezugriff eine Adresse empfangen, welche im Komparator COMW mit der Adresse des M2M-Moduls verglichen wird. Wird eine Übereinstimmung zwischen den Adressen festgestellt sowie der Schreibzugriff über ein entsprechendes WR-Signal detektiert, werden die Nutzdaten über den Speicherbereich I2DAT empfangen und die Prüfsummenberechnung durch die Einheit CALC durchgeführt. Bei Empfang von Daten wird durch die Schnittstelleneinheit IF die Ankunft eines Stoppbits überwacht, was durch Bezugszeichen CS (CS = Check I²C Stop) angedeutet ist. Wird ein Stoppbit durch die I²C-Schnittstelle erkannt, wird das letzte gesendete Byte, das die Prüfsumme enthält, mit der im Modul CALC berechneten Prüfsumme verglichen (z.B. auf Gleichheit, basierend auf einem XOR-Vergleich usw.). Dieser Vergleich wird durch den Schritt S (LRC ok?) in Fig. 2 angedeutet.

Wird eine Übereinstimmung im Rahmen des Vergleichs festgestellt (Zweig Y aus S), wird das Statusbit SB gesetzt und in das Statuswort das obige Byte BC eingetragen, mit dem der Aktivitätsstatus des Mikrocontrollers angezeigt wird. Ferner werden die empfangenen Daten an die auf dem Mikroprozessor MP laufende Applikation weitergegeben. Solange der Mikroprozessor mit dem Verarbeiten der empfangenen Daten beschäftigt ist, bleibt das Statusbit SB gesetzt, so dass ein weiterer Lese- bzw. Schreibzugriff (mit Ausnahme der weiter unten beschriebenen Reset-Sequenz) während der Aktivität des Mikroprozessors unterbunden wird. Ergibt der Vergleich der Prüfsumme in Schritt S, dass keine Übereinstimmung der Prüfsummen vorliegt (Zweig N aus S), wird in das Schieberegister I2DAT direkt der Wert WD (WD = Wrong Data) eingetragen. Die Applikation des Mikroprozessors bekommt dann die fehlerhaft empfangenen Daten nicht zu sehen, sondern empfängt den Status WD.

Solange die Prüfsumme im Hardwaremodul CALC nicht überprüft wurde, werden die empfangenen Daten in einen dafür vorgesehenen Zwischenspeicher gelegt. Auf diese Weise wird sichergestellt, dass die weiter unten beschriebene Reset-Sequenz, mit der der Mikroprozessor des M2M-Moduls zurückgesetzt wird, auch dann durchkommen kann, wenn das Statusbit SB gesetzt ist und kein Speicher für die Daten der Reset-Sequenz vorhanden ist. Ist das Statusbit SB gesetzt und werden doch mehr Daten gesendet, wird die Berechnung der Prüfsumme nicht angestoßen und das Statusbit bleibt erhalten.

In dem Szenario der Fig. 2 ist zur Verdeutlichung nochmals der Mechanismus bei einem Lesezugriff auf die I²C-Schnittstelle gezeigt. Wie oben beschrieben, wird dabei in dem Komparator COMR ein Vergleich der empfangenen Adresse mit der Adresse des Mikrocontrollers zusammen mit dem Read-Signal durchgeführt, sofern als Status ST ermittelt wird, dass das Bit SB gesetzt ist. Wird im Rahmen dieses Vergleichs eine Übereinstimmung der Adressen sowie das Vorhandensein des Read-Signals festgestellt, wird in das Feld I2DAT das oben beschriebene Byte BC geschrieben, wodurch dem externen Modul mitgeteilt wird, dass das M2M-Modul beschäftigt ist.

Nachfolgend wird anhand von Fig. 3 erläutert, wie die Schnittstelleneinheit IF angepasst werden kann, um zu ermöglichen, dass das externe Modul EM einen Reset des M2M-Moduls bzw. seines Mikroprozessors MP auslösen kann. Mikroprozessoren verfügen in der Regel über einen Reset-Eingang, um den Mikroprozessor zurücksetzen zu können (Reset oder Power-on-Reset). Der Reset ist beispielsweise in ISO7816 beschrieben. Ein Reset dient dem Zurücksetzen des Mikroprozessors MP aus einem beliebigen Betriebszustand in seinen Grundzustand, wie er insbesondere vor dem Empfangen und Ausführen von Anwendungskommandos vorliegt. Er wird beispielsweise manchmal benötigt, um den Mikroprozessor nach einem internen oder bedienungsbedingten Fehler aus einem fehlerhaften Betriebsmodus heraus wieder in den Grundzustand zu versetzen.

Die Übermittlung einer Reset-Sequenz erfolgt im Rahmen eines Schreibzugriffs, wobei nach erfolgreichem Adressenvergleich und Detektion des Schreibzugriffs mittels des Komparators COMW ein Abfragezustand für die zu empfangenden Datenbytes auf FBY (FBY = First Byte) gesetzt wird. Wird nun das erste Datenbyte übertragen, wird im Rahmen des Vergleichs COM1 auf den entsprechenden Wert des Abfragezustands abgefragt, der im hier beschriebenen Beispiel "0x5A" ist. Wird dieser Wert erkannt, wird der Abfragezustand auf SBY (SBY = Second Byte) gesetzt. Anschließend wird das nächste empfangene Byte im Rahmen des Vergleichs COM2 auf einen vorbestimmten Wert überprüft. In der hier beschriebenen Ausführungsform ist dieser Wert dabei der inverse Wert des ersten Bytes, d.h. er lautet "0xA5". Dieser inverse Wert wird deswegen benötigt, weil der I²C-Bus über keinen Prüfsummenmechanismus verfügt. Wird der Wert "0xA5" für das zweite empfangene Byte nicht erkannt, wird intern der Status "Invalid" gesetzt, was durch das Bezugszeichen SI angedeutet ist. Dieser Status kann von der Applikation AP ausgelesen und weiterverarbeitet bzw. zurückgesetzt werden. Wird demgegenüber für das zweite empfangene Byte das Muster "0xA5" erkannt, wird ein Reset-Signal generiert, was durch das Bezugszeichen RES in Fig. 3 angedeutet ist. Diese Signal kann nun entweder direkt ein Reset im Mikroprozessor des M2M-Moduls erzeugen oder einen NMI (NMI = nicht maskierter Interrupt) oder einen normalen Interrupt auslösen.

In der nachfolgenden Tabelle 2 ist nochmals die Sequenz der Datenübertragung im Rahmen der Übermittlung der Reset-Sequenz wiedergegeben:

**Tabelle 2:**

| Start | Slave address | R/W | ACK | Data (Statuswort) | ACK | Data (invers) | ACK | Stop |
|---|---|---|---|---|---|---|---|---|
| | M2M-Modul | 0 | 0 | 0x5A | 0 | 0x5A | 0 | |

In dieser Tabelle bezeichnen die erste bis dritte, fünfte, siebte und neunte Spalte von links eine Datenübertragung vom externen Modul zur I²C-Schnittstelle, wohingegen die anderen Spalten eine Datenübertragung in umgekehrter Richtung darstellen. Zunächst wird in der I²C-Schnittstelle das Startsignal Start empfangen. Anschließend erfolgt die Übertragung der Slave-Adresse des M2M-Moduls sowie des R/W-Bits, welches auf "0" gesetzt ist, wodurch ein Schreibzugriff angedeutet wird. Die Datenübertragung wird durch ein Acknowledgement ACK mit dem Bitwert 0 über die Schnittstelle bestätigt. Schließlich erfolgt die Übertragung des ersten Bytes der Reset-Sequenz in der Form des Statusworts "0x5A". Dies wird wiederum durch ein Acknowledgement von der I²C-Schnittstelle bestätigt. Schließlich wird das zweite inverse Byte "0xA5" des Reset-Signals übermittelt, was mit einem weiteren Acknowledgement ACK bestätigt wird. Anschließend wird die Datenübermittlung mit dem Stoppsignal des I²C-Protokolls beendet.

Das im Vorangegangenen beschriebene M2M-Modul mit entsprechender I²C-Schnittstelle weist eine Reihe von Vorteilen auf. Insbesondere kann das M2M-Modul in ein bestehendes Betriebssystem auf einer Platine bzw. einem Motherboard unter Verwendung der an sich bekannten I²C-Schnittstelle integriert werden. Dabei muss das I²C-Protkoll nicht verändert werden. Vielmehr werden über das Protokoll Applikationsdaten übermittelt, über welche in geeigneter Weise mitgeteilt werden kann, dass das M2M-Modul beschäftigt ist. In speziellen Varianten wird über das erfindungsgemäße M2M-Modul ferner ein Mechanismus bereitgestellt, mit dem über die I²C-Schnittstelle auch ein Reset-Signal empfangen werden kann, ohne dass hierzu zusätzliche Reset-Leitungen bereitgestellt werden müssen bzw. angesteuert werden müssen.

## Patentansprüche

1. Mikroprozessormodul, insbesondere Chipkarten-Mikroprozessormodul, umfassend einen Mikroprozessor (MP) zum Ausführen einer Applikation (AP) und eine Schnittstelleneinheit (IF), über welche im Rahmen der Applikation (AP) zwischen dem Mikroprozessormodul (M) und einem externen Modul (EM) Applikationsdaten (AD) der Applikation (AP) mittels eines vorbestimmten Übertragungsprotokolls austauschbar sind;
**dadurch gekennzeichnet, dass**
das Mikroprozessormodul (M) derart ausgestaltet ist, dass ein Aktivitätsstatus (SB) gesetzt wird, wenn der Mikroprozessor (MP) mit der Verarbeitung von Applikationsdaten (AD) beschäftigt ist, und dass im gesetzten Aktivitätsstatus (SB) bei einem oder mehreren vorgegebenen Zugriffen des externen Moduls (EM) auf die Schnittstelleneinheit (IF) ein vorbestimmter Code (BC) der Applikation, mit dem der Aktivitätsstatus (SB) angezeigt wird, über das vorbestimmte Übertragungsprotokoll durch die Schnittstelleneinheit (IF) ausgesendet wird.

2. Mikroprozessormodul nach Anspruch 1, **dadurch gekennzeichnet, dass** die Schnittstelleneinheit (IF) zur kontaktbehafteten und/oder kontaktlosen Kommunikation mit dem externen Modul (EM) ausgelegt ist.

3. Mikroprozessormodul nach Anspruch 1 oder 2, **dadurch gekennzeichnet, dass** die Schnittstelleneinheit (IF) eine I²C-Schnittstelleneinheit ist und das vorbestimmte Übertragungsprotokoll das I²C-Protokoll ist.

4. Mikroprozessormodul nach einem der vorhergehenden Ansprüche, **dadurch gekennzeichnet, dass** das Mikroprozessormodul (M) ein M2M-Modul und/ oder ein Sicherheitsmodul ist.

5. Mikroprozessormodul nach einem der vorhergehenden Ansprüche, **dadurch gekennzeichnet, dass** die Schnittstelleneinheit (IF) ein Schieberegister (SR) umfasst, über das die Applikationsdaten (AD) ausgetauscht werden.

6. Mikroprozessormodul nach einem der vorhergehenden Ansprüche, **dadurch gekennzeichnet, dass** das Mikroprozessormodul (M) derart ausgestaltet ist, dass der Aktivitätsstatus (SB) über ein Datenfeld und insbesondere über ein Statusbit in einem Speicher des Mikroprozessormoduls (M) angezeigt wird.

7. Mikroprozessormodul nach einem der vorhergehenden Ansprüche, **dadurch gekennzeichnet, dass** der Aktivitätszustand (SB) durch die Applikation (AP) und/ oder durch eine Hardwarekomponente des Mikroprozessormoduls (M) gesetzt wird.

8. Mikroprozessormodul nach einem der vorhergehenden Ansprüche, **dadurch gekennzeichnet, dass** das Mikroprozessormodul (M) derart ausgestaltet ist, dass im gesetzten Aktivitätsstatus (SB) und dann, wenn eine mit der Adresse des Mikroprozessormoduls (M) zu vergleichenden Adresse an der Schnittstelleneinheit (IF) empfangen wird, der vorbestimmte Code (BC) der Applikation (AP) durch die Schnittstelleneinheit (IF) ausgesendet wird, falls eine Übereinstimmung zwischen der empfangenen Adresse und der Adresse des Mikroprozessormoduls (M) festgestellt wird und ein Lesezugriff des externen Moduls (EM) detektiert wird.

9. Mikroprozessormodul nach einem der vorhergehenden Ansprüche, **dadurch gekennzeichnet, dass** das Mikroprozessormodul (M) derart ausgestaltet ist, dass der Aktivitätsstatus (SB) dann gesetzt wird, wenn ein vorgegebener Schreibzugriff des externen Moduls (EM) über die Schnittstelleineinheit (IF) erfolgt.

10. Mikroprozessormodul nach Anspruch 9, **dadurch gekennzeichnet, dass** das Mikroprozessormodul (M) derart ausgestaltet ist, dass die im Rahmen eines Schreibzugriffs des externen Moduls (EM) in der Schnittstelleneinheit (IF) empfangenen Daten auf Integrität überprüft werden, wobei bei vorhandener Integrität der Aktivitätsstatus (SB) gesetzt wird und die empfangenen Daten durch die Applikation (AP) weiterverarbeitet werden und wobei bei nicht vorhandener Integrität ein Fehlercode an die Applikation (AP) ausgegeben wird.

11. Mikroprozessormodul nach einem der vorhergehenden Ansprüche, **dadurch gekennzeichnet, dass** die Schnittstelleneinheit (IF) den Empfang einer vorbestimmten Reset-Sequenz detektieren kann, wobei bei der Detektion des Empfangs der Reset-Sequenz das Zurücksetzen des Mikroprozessormoduls (M) durch die Schnittstelleneinheit (IF) veranlasst wird.

12. Mikroprozessormodul nach Anspruch 11, **dadurch gekennzeichnet, dass** die Reset-Sequenz durch den aufeinander folgenden Empfang eines ersten vorbestimmten Datums und eines zweiten vorbestimmten Datums detektierbar wird.

13. Mikroprozessormodul nach Anspruch 12, **dadurch gekennzeichnet, dass** das zweite Datum das Inverse des ersten Datums ist.

14. Kommunikationssystem mit einem Mikroprozessormodul (M) nach einem der vorhergehenden Ansprüche und einem externen Modul (EM), welches auf die Schnittstelleneinheit (IF) des Mikroprozessormoduls (M) zugreifen kann und Applikationsdaten (AD) verarbeiten kann,
**dadurch gekennzeichnet, dass**
das Kommunikationssystem derart ausgestaltet ist, dass im gesetzten Aktivitätsstatus (SB) des Mikroprozessormoduls (M) bei einem oder mehreren vorgegebenen Zugriffen des externen Moduls (EM) auf die Schnittstelleneinheit (IF) der vorbestimmter Code (BC) der Applikation (AP) über das vorbestimmte Übertragungsprotokoll durch die Schnittstelleneinheit (IF) ausgesendet wird und vom externen Modul (EM) empfangen wird, wodurch dem externen Modul (EM) im Rahmen der Applikation (AP) der Aktivitätsstatus (SB) angezeigt wird.

15. Verfahren zum Betrieb eines Mikroprozessormoduls nach einem der Ansprüche 1 bis 13, wobei auf dem Mikroprozessor (MP) des Mikroprozessormoduls (M) eine Applikation (AP) ausgeführt wird,
**dadurch gekennzeichnet, dass**
ein Aktivitätsstatus (SB) gesetzt wird, wenn der Mikroprozessor (MP) mit der Verarbeitung von Applikationsdaten (AD) beschäftigt ist, wobei im gesetzten Aktivitätsstatus (SB) bei einem oder mehreren vorgegebenen Zugriffen eines externen Moduls (EM) auf die Schnittstelleneinheit (IF) des Mikroprozessormoduls (M) ein vorbestimmter Code (BC) der Applikation (AP), mit dem der Aktivitätsstatus (SB) angezeigt wird, über ein vorbestimmte Übertragungsprotokoll durch die Schnittstelleneinheit (IF) ausgesendet wird.

## Claims

1. A microprocessor module, in particular a chip-card microprocessor module, comprising a microprocessor (MP) for executing an application (AP) and an interface unit (IF) via which, within the framework of the application (AP), application data (AD) of the application (AP) are exchangeable between the microprocessor module (M) and an external module (EM) by means of a predetermined transmission protocol;
**characterized in that**
the microprocessor module (M) is so configured that an activity status (SB) is set when the microprocessor (MP) is busy processing application data (AD), and that in the set activity status (SB), upon one or several predetermined accesses of the external module (EM) to the interface unit (IF), a predetermined code (BC) of the application indicating the activity status (SB) is emitted by the interface unit (IF) using the predetermined transmission protocol.

2. The microprocessor module according to claim 1, **characterized in that** the interface unit (IF) is designed for contact-type and/or contactless communication with the external module (EM).

3. The microprocessor module according to claim 1 or 2, **characterized in that** the interface unit (IF) is an I²C interface unit and the predetermined transmission protocol is the I²C protocol.

4. The microprocessor module according to any of the preceding claims, **characterized in that** the microprocessor module (M) is an M2M module and/ or a security module.

5. The microprocessor module according to any of the preceding claims, **characterized in that** the interface unit (IF) comprises a shift register (SR) via which the application data (AD) are exchanged.

6. The microprocessor module according to any of the preceding claims, **characterized in that** the microprocessor module (M) is so configured that the activity status (SB) is displayed via a data field and in particular via a status bit in a memory of the microprocessor module (M).

7. The microprocessor module according to any of the preceding claims, **characterized in that** the activity status (SB) is set by the application (AP) and/or by a hardware component of the microprocessor module (M).

8. The microprocessor module according to any of the preceding claims, **characterized in that** the microprocessor module (M) is so configured that in the set activity status (SB), and when an address to be compared with the address of the microprocessor module (M) is received at the interface unit (IF), the predetermined code (BC) of the application (AP) is emitted by the interface unit (IF), if a match of the received address and the address of the microprocessor module (M) is ascertained and a read access of the external module (EM) is detected.

9. The microprocessor module according to any of the preceding claims, **characterized in that** the microprocessor module (M) is so configured that the activity status (SB) is set when a predetermined write access of the external module (EM) takes place via the interface unit (IF).

10. The microprocessor module according to claim 9, **characterized in that** the microprocessor module (M) is so configured that the data received in the interface unit (IF) within the framework of a write access of the external module (EM) are checked for integrity, wherein, if integrity is given, the activity status (SB) is set and the received data are further processed by the application (AP), and wherein, if integrity is not given, an error code is output to the application (AP).

11. The microprocessor module according to any of the preceding claims, **characterized in that** the interface unit (IF) can detect the receipt of a predetermined reset sequence, wherein, upon the detection of the receipt of the reset sequence, the resetting of the microprocessor module (M) is prompted by the interface unit (IF).

12. The microprocessor module according to claim 11, **characterized in that** the reset sequence becomes detectable through the consecutive receipt of a first predetermined datum and of a second predetermined datum.

13. The microprocessor module according to claim 12, **characterized in that** the second datum is the inverse of the first datum.

14. A communication system having a microprocessor module (M) according to any of the preceding claims and an external module (EM) which can access the interface unit (IF) of the microprocessor module (M) and process application data (AD),
**characterized in that**
the communication system is so configured that in the set activity status (SB) of the microprocessor module (M), upon one or several predetermined accesses of the external module (EM) to the interface unit (IF), the predetermined code (BC) of the application (AP) is emitted by the interface unit (IF) using the predetermined transmission protocol, and is received by the external module (EM), thereby indicating the activity status (SB) to the external module (EM) within the framework of the application (AP).

15. A method for operating a microprocessor module according to any of the claims 1 to 13, wherein on the microprocessor (MP) of the microprocessor module (M) an application (AP) is executed, **characterized in that**
an activity status (SB) is set when the microprocessor (MP) is busy processing application data (AD), wherein in the set activity status (SB), upon one or several predetermined accesses of an external module (EM) to the interface unit (IF) of the microprocessor module (M), a predetermined code (BC) of the application (AP) indicating the activity status (SB) is emitted by the interface unit (IF) using a predetermined transmission protocol.

## Revendications

1. Module de microprocesseur, notamment module de microprocesseur de carte à puce, comprenant un microprocesseur (MP) destiné à l'exécution d'une application (AP) et une unité d'interface (IF) par l'intermédiaire de laquelle, dans le cadre de l'application (AP), des données d'application (AD) de l'application (AP) sont échangeables entre le module de microprocesseur (M) et un module externe (EM) au moyen d'un protocole de transmission prédéterminé;
**caractérisé en ce que**
le module de microprocesseur (M) est réalisé de telle manière qu'un état d'activité (SB) est activé quand le microprocesseur (MP) est occupé au traitement de données d'application (AD), et **en ce que**, dans l'état d'activité (SB) activé, en cas d'un ou de plusieurs accès préfixés du module externe (EM) à l'unité d'interface (IF), un code (BC) prédéterminé de l'application avec lequel l'état d'activité (SB) est indiqué est envoyé par l'unité d'interface (IF) par l'intermédiaire de protocole de transmission prédéterminé.

2. Module de microprocesseur selon la revendication 1, **caractérisé en ce que** l'unité d'interface (IF) est conçue pour la communication avec et/ou sans contact avec le module externe (EM).

3. Module de microprocesseur selon la revendication 1 ou 2, **caractérisé en ce que** l'unité d'interface (IF) est une unité d'interface I²C et **en ce que** le protocole de transmission prédéterminé est le protocole I²C.

4. Module de microprocesseur selon une des revendications précédentes, **caractérisé en ce que** le module de microprocesseur (M) est un module M2M et/ou un module de sécurité.

5. Module de microprocesseur selon une des revendications précédentes, **caractérisé en ce que** l'unité d'interface (IF) comprend un registre à décalage (SR) par l'intermédiaire duquel les données d'application (AD) sont échangées.

6. Module de microprocesseur selon une des revendications précédentes, **caractérisé en ce que** le module de microprocesseur (M) est réalisé de telle manière que l'état d'activité (SB) est indiqué par l'intermédiaire d'un champ de données et notamment par l'intermédiaire d'un bit d'état dans une mémoire du module de microprocesseur (M).

7. Module de microprocesseur selon une des revendications précédentes, **caractérisé en ce que** l'état d'activité (SB) est activé par l'application (AP) et/ou par un composant matériel du module de microprocesseur (M).

8. Module de microprocesseur selon une des revendications précédentes, **caractérisé en ce que** le module de microprocesseur (M) est réalisé de telle manière que, dans l'état d'activité (SB) activé et si une adresse à comparer avec l'adresse du module de microprocesseur (M) est reçue à l'unité d'interface (IF), le code (BC) prédéterminé de l'application (AP) est envoyé par l'unité d'interface (IF) dans le cas où une concordance entre l'adresse reçue et l'adresse du module de microprocesseur (M) est constatée et un accès en lecture du module externe (EM) est détecté.

9. Module de microprocesseur selon une des revendications précédentes, **caractérisé en ce que** le module de microprocesseur (M) est réalisé de telle manière que l'état d'activité (SB) est activé quand un accès en écriture préfixé du module externe (EM) a lieu par l'intermédiaire de l'unité d'interface (IF).

10. Module de microprocesseur selon la revendication 9, **caractérisé en ce que** le module de microprocesseur (M) est réalisé de telle manière que les données reçues dans l'unité d'interface (IF) dans le cadre d'un accès en écriture du module externe (EM) sont vérifiées quant à leur intégrité, l'état d'activité (SB) étant activé et les données reçues étant traitées subséquemment par l'application (AP) en cas d'intégrité, et un code d'erreur étant délivré à l'application (AP) en cas de non intégrité.

11. Module de microprocesseur selon une des revendications précédentes, **caractérisé en ce que** l'unité d'interface (IF) peut détecter la réception d'une séquence prédéterminée de remise, la réinitialisation du module de microprocesseur (M) étant, dans le cas de la détection de la réception de la séquence de remise, déclenchée par l'unité d'interface (IF)

12. Module de microprocesseur selon la revendication 11, **caractérisé en ce que** la séquence de remise devient détectable par la réception consécutive d'une première date prédéterminée et d'une deuxième date prédéterminée.

13. Module de microprocesseur selon la revendication 12, **caractérisé en ce que** la deuxième date prédéterminée est l'inverse de la première date.

14. Système de communication comportant un module de microprocesseur (M) selon une des revendications précédentes et un module externe (EM) qui peut avoir accès à l'unité d'interface (IF) du module de microprocesseur (M) et peut traiter des données d'application (AD),
**caractérisé en ce que**
le système de communication est réalisé de telle manière que, dans l'état d'activité (SB) activé du module de microprocesseur (M), en cas d'un ou de plusieurs accès préfixés du module externe (EM) à l'unité d'interface (IF), le code (BC) prédéterminé de l'application (AP) est envoyé par l'unité d'interface (IF) par l'intermédiaire du protocole de transmission prédéterminé et est reçu par le module externe (EM), ce par quoi l'état d'activité (SB) est indiqué au module externe (EM) dans le cadre de l'application (AP).

15. Procédé d'exploitation d'un module de microprocesseur selon une des revendications de 1 à 13, une application (AP) étant exécutée sur le microprocesseur (MP) du module de microprocesseur (M),
**caractérisé en ce que**
un état d'activité (SB) est activé quand le microprocesseur (MP) est occupé au traitement de données d'application (AD), un code (BC) prédéterminé de l'application (AP) avec lequel l'état d'activité (SB) est indiqué étant, dans l'état d'activité (SB) activé, en cas d'un ou de plusieurs accès préfixés d'un module externe (EM) à l'unité d'interface (IF) du module de microprocesseur (M), envoyé par l'unité d'interface (IF) par l'intermédiaire d'un protocole de transmission prédéterminé.
